(19) Europäisches Patentamt
European Patent Office
Office européen des brevets

(11) EP 0 738 764 B1

(12) EUROPÄISCHE PATENTSCHRIFT

(45) Veröffentlichungstag und Bekanntmachung des Hinweises auf die Patenterteilung:
**16.09.1998 Patentblatt 1998/38**

(21) Anmeldenummer: **96105936.7**

(22) Anmeldetag: **16.04.1996**

(51) Int Cl.$^6$: **C09B 35/60**, C09D 11/00

(54) **Tetrakisazoverbindungen, ihre Herstellung und ihre Verwendung als Farbstoffe**

Tetrakisazo compounds, their preparation and their use as dyestuffs

Composés tétrakisazoiques, leur préparation et leur utilisation comme colorants

(84) Benannte Vertragsstaaten:
**CH DE ES FR GB IT LI**

(30) Priorität: **22.04.1995 DE 19514880**

(43) Veröffentlichungstag der Anmeldung:
**23.10.1996 Patentblatt 1996/43**

(73) Patentinhaber: **Clariant GmbH**
**65929 Frankfurt am Main (DE)**

(72) Erfinder:
- **Bauer, Wolfgang, Dr.**
  **63477 Maintal (DE)**
- **Baumgart, Dieter, Dr.**
  **63329 Egelsbach (DE)**
- **Zöller, Walter**
  **63911 Klingenberg (DE)**

(56) Entgegenhaltungen:
**EP-A- 0 014 378**
**DE-A- 2 913 720**
**DE-A- 3 224 660**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 738 764 B1

**Beschreibung**

Die vorliegende Erfindung betrifft neue Tetrakisazoverbindungen der allgemeinen Formel I,

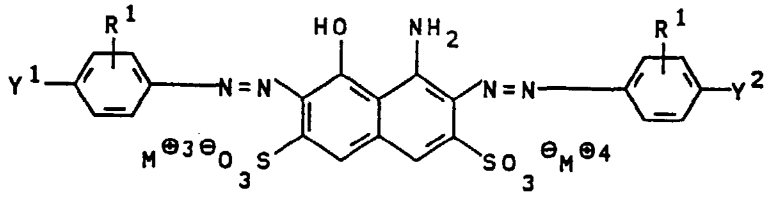

(I)

worin

$Y^1$ -

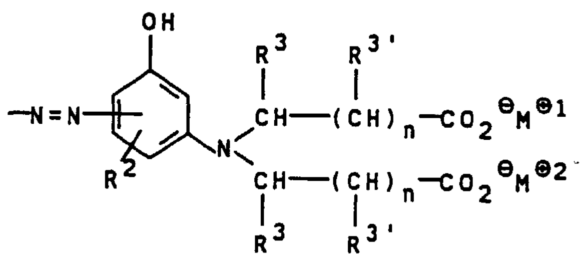

und

$Y^2$ -

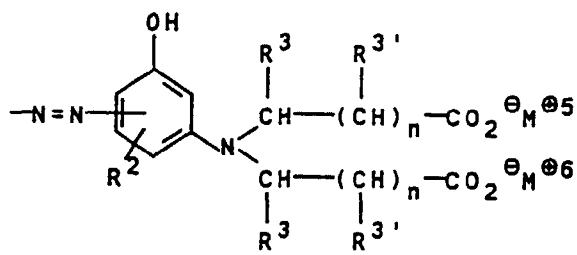

bedeuten,
ihre Herstellung und ihre Verwendung als Farbstoffe, insbesondere in Tinten und in Aufzeichnungsflüssigkeiten für das Ink-Jet-Druckverfahren, sowie solche Aufzeichnungsflüssigkeiten.

Tinten, Schreibflüssigkeiten, Markierungsflüssigkeiten, allgemein Aufzeichnungsflüssigkeiten, bestehen im Prinzip aus einem oder mehreren löslichen Farbstoffen, die in einem Lösungsmittel, z.B. Wasser, oder einem Lösungsmittelgemisch gelöst sind. Die Lösung enthält in der Regel noch Hilfsstoffe, wie z.B. oberflächenaktive Substanzen, Feuchthaltemittel und Konservierungsmittel. Besondere Anforderungen werden an Aufzeichnungsflüssigkeiten gestellt, die beim Ink-Jet- oder Tintenstrahl-Druckverfahren Verwendung finden sollen, einem berührungslosen Druckverfahren, bei dem Tröpfchen der Aufzeichnungsflüssigkeit aus einer oder mehreren Düsen auf die zu bedruckende Unterlage gespritzt werden. Um Drucke hoher Qualität, d.h. hoher Schärfe und Klarheit zu erhalten, müssen z.B. bestimmte Anforderungen hinsichtlich Reinheit, Partikel freiheit, Viskosität, Oberflächenspannung oder Korrosivität der Aufzeichnungsflüssigkeit erfüllt werden, die wiederum bestimmte Anforderungen an die Eigenschaften der zur Herstellung der Aufzeichnungsflüssigkeit verwendeten Farbstoffe zur Folge haben. Z.B. müssen die Farbstoffe insbesondere eine hohe Löslichkeit aufweisen, damit keine Abscheidung von Niederschlägen oder keine Krustenbildung an der Düse erfolgen. Daneben sollen die Farbstoffe aber natürlich auch möglichst farbstark sein und hohe Echtheiten aufweisen, damit die Drucke beständig sind.

Tetrakisazoverbindungen der allgemeinen Formel II,

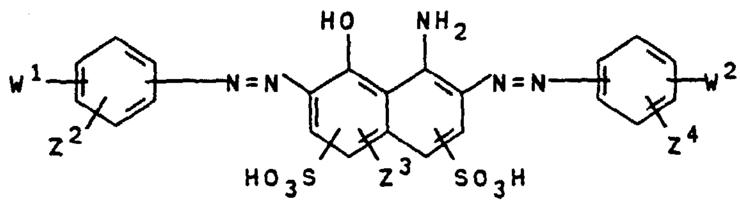

(II)

worin

$W^1$ - 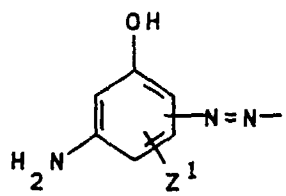 und $W^2$ - 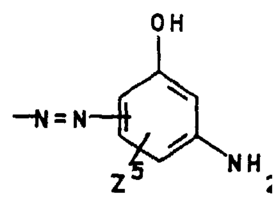

bedeuten und in der die Reste $Z^1$ bis $Z^5$ an den aromatischen Kernen unterschiedliche Bedeutungen haben können, bzw. die entsprechenden Salze und ihre Verwendung zum Färben verschiedener Materialien und auch ihre Verwendung als Farbstoffe in Aufzeichnungsflüssigkeiten für das Ink-Jet-Druckverfahren sind bekannt, siehe z.B. DE-C-32 39 026, DE-C-32 24 660, DE-A-30 23 417, DE-A-29 48 309, DE-A-29 27 062, DE-A-29 13 720, DE-A-22 44 991, JP-A-58 113 272, JP-A-63 278 891, JP-A-63 309 568, JP-A-63 317 570.

Aufzeichnungsflüssigkeiten für Ink-Jet-Druckverfahren, die gemäß dem Stand der Technik Farbstoffe der allgemeinen Formel II enthalten, weisen allerdings eine Reihe von Nachteilen auf, so z.B. vielfach eine ungenügende Lagerstabilität, die zur Abscheidung von Farbstoffkristallen, zum Verstopfen von Düsen und zu unscharfen Druckbildern führen kann, und ungenügende Echtheiten, insbesondere eine ungenügende Wasserechtheit, vor allem auf schwach sauren Papierarten. Es besteht somit weiterhin Bedarf nach Aufzeichnungsflüssigkeiten bzw. dafür geeigneten Farbstoffen mit verbesserten Eigenschaftsprofilen.

Überraschend wurde nun gefunden, daß die genannten Nachteile der Farbstoffe der allgemeinen Formel II bzw. der sie enthaltenden Aufzeichnungsflüssigkeiten nicht mehr bestehen, wenn sich anstelle der Aminogruppen an den beiden endständigen Phenylresten, d.h. in den Gruppen $W^1$ und $W^2$, in der allgemeinen Formel II N,N-Bis-(carboxyalkyl)aminogruppen befinden. Solche Farbstoffe weisen hinsichtlich ihrer Färbeeigenschaften deutliche Vorteile auf, aus löslichen Farbstoffen mit solchen Gruppen hergestellte Tinten und Aufzeichnungsflüssigkeiten haben eine hervorragende Lagerstabilität und liefern Druckbilder von ausgezeichneter Qualität, die neben hoher Schärfe und Brillanz auch sehr gute Echtheiten besitzen.

Gegenstand der vorliegenden Erfindung sind somit neue Tetrakisazoverbindungen der allgemeinen Formel I,

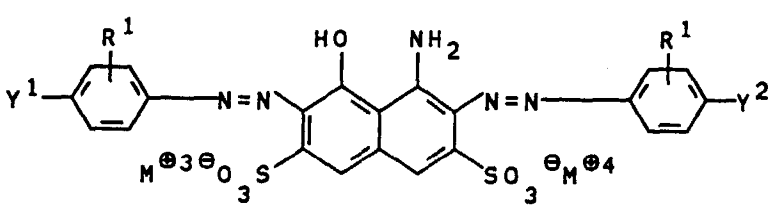

(I)

worin

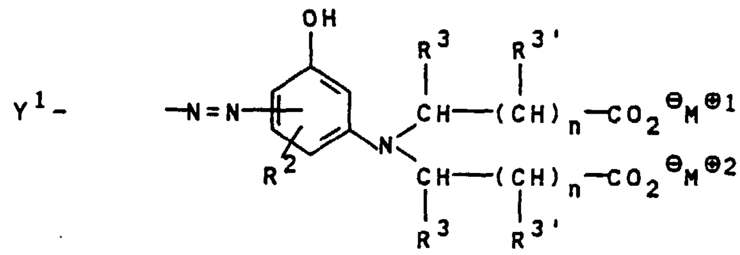

und

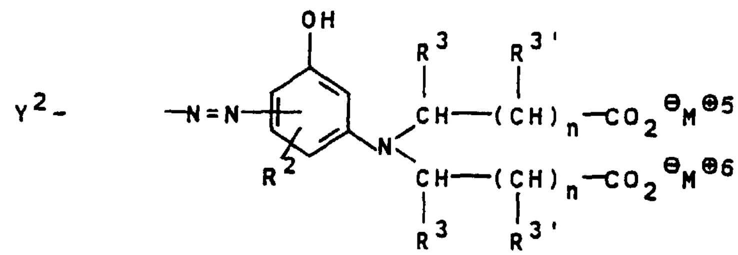

bedeuten und

$R^1$ für Wasserstoff oder ($C_1$-$C_4$)-Alkyl steht;
$R^2$ für Wasserstoff, ($C_1$-$C_4$)-Alkyl oder Halogen steht;
$R^3$ und $R^{3'}$ unabhängig voneinander für Wasserstoff oder ($C_1$-$C_4$)-Alkyl stehen;
$M^{\oplus 1}$, $M^{\oplus 2}$, $M^{\oplus 3}$, $M^{\oplus 4}$, $M^{\oplus 5}$ und $M^{\oplus 6}$ unabhängig voneinander für ein Kation stehen;
n für 0 oder 1 steht.

Die Verbindungen der allgemeinen Formel I können sowohl als Einzelsubstanzen als auch als Gemische vorliegen.

($C_1$-$C_4$)-Alkyl bedeutet beispielsweise Methyl, Ethyl, n-Propyl, i-Propyl, n-Butyl, i-Butyl, sec-Butyl oder tert-Butyl, wobei Methyl bevorzugt ist.

Halogen bedeutet beispielsweise Fluor, Chlor, Brom oder Iod, wobei Chlor bevorzugt ist.

Bei den für $M^{\oplus 1}$ bis $M^{\oplus 6}$ stehenden Kationen kann es sich jeweils um ein einfach positiv geladenes Ion oder um ein Äquivalent eines zwei- oder mehrfach positiv geladenen Ions handeln. Ein für $M^{\oplus 1}$ bis $M^{\oplus 6}$ stehendes Kation kann anorganisch oder organisch sein.

Geeignete anorganische Kationen sind hier insbesondere Alkalimetall- und Erdalkalimetallionen und das Ammoniumion sowie das Wasserstoffion. Stehen eines, mehrere oder alle Kationen $M^{\oplus 1}$ bis $M^{\oplus 6}$ für das Wasserstoffion, so liegen die Verbindungen der allgemeinen Formel I bzw. die jeweiligen Carboxylat- und/oder Sulfonat-Gruppen in Form der freien Säuren vor, nicht als Salze. Beispiele für Alkalimetallionen sind das Lithium-, Natrium-, Kalium-, Rubidium- und Cesium-Ion, Beispiele für Erdalkalimetallionen das Magnesium-, Calcium-, Strontium- und Bariumion.

Bevorzugte anorganische Kationen sind neben dem Wasserstoffion die Alkalimetallionen und das Ammoniumion. Besonders bevorzugt sind das Lithium-, Natrium-, Kalium-und Ammonium-Ion, die insbesondere dann günstig sind, wenn wasserlösliche Verbindungen der allgemeinen Formel I erwünscht sind. Ganz besonders bevorzugte anorganische Kationen sind diejenigen von Lithium und Natrium.

Geeignete organische Kationen, die für $M^{\oplus 1}$ bis $M^{\oplus 6}$ stehen können, sind insbesondere Ammoniumionen und von Stickstoffheterocyclen abgeleitete Kationen und quartäre Phosphoniumionen. Bei den Ammoniumionen kann es sich um primäre, sekundäre, tertiäre und quartäre Ammoniumionen handeln, die darin enthaltenen organischen Reste, z. B. Alkyl-, Alkenyl-, Aryl- oder Aralkylreste, können gleich oder verschieden sein und unsubstituiert oder substituiert sein. Die Ammoniumionen können sich auch von Verbindungen mit mehreren Aminofunktionen ableiten, z.B. von Di- oder Triaminen. In einem solchen Fall können alle, einige oder nur eine der Aminofunktionen als Ammoniumionen vorliegen, es können also auch mehrfach geladene Ammoniumionen vorliegen. Stickstoffheterocyclen, von denen sich geeignete Kationen ableiten, können aromatisch, teilweise ungesättigt oder gesättigt sein und neben dem oder den

positiv geladenen Stickstoffatomen noch weitere Heteroatome, z.B. ungeladene Stickstoffatome oder Sauerstoffatome, enthalten. Als Beispiele für Stickstoffheterocyclen seien Pyrrolidin, Piperidin, Piperazin oder Morpholin, die alle auch am Stickstoff substituiert sein können, und Pyridin oder Imidazol genannt. Die Kationen können aus den Heterocyclen formal durch Hinzufügen eines Protons oder eines substituierten oder unsubstituierten Alkylrests hervorgehen.

Bevorzugte organische Kationen, die für $M^{\oplus 1}$ bis $M^{\oplus 6}$ stehen, sind zum einen organische Ammoniumionen der allgemeinen Formel III,

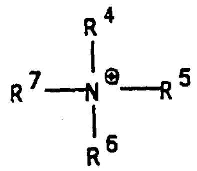

(III)

in der $R^4$, $R^5$, $R^6$ und $R^7$ unabhängig voneinander für Wasserstoff, unsubstituiertes $(C_1\text{-}C_4)$-Alkyl oder durch eine oder mehrere Hydroxy- oder 2-Hydroxyethoxy-Gruppen substituiertes $(C_1\text{-}C_4)$-Alkyl stehen. Für $M^{\oplus 1}$ bis $M^{\oplus 6}$ stehende Kationen der allgemeinen Formel III sind insbesondere dann günstig, wenn wasserlösliche Tetrakisazoverbindungen der allgemeinen Formel I erwünscht sind. Für die Alkylreste gelten auch hier die oben gegebenen Erläuterungen. Im Falle von für $R^4$ bis $R^7$ stehenden substituierten Alkylresten sind solche mit einem Hydroxy- oder einem 2-Hydroxyethoxy-Substituenten besonders bevorzugt.

Bevorzugte organische Kationen, die für $M^{\oplus 1}$ bis $M^{\oplus 6}$ stehen, sind zum anderen auch Ammoniumionen der allgemeinen Formel IV,

$$R^8\text{-}\overset{\oplus}{N}H_3 \qquad \text{(IV)}$$

in der $R^8$ für geradkettiges oder verzweigtes $(C_6\text{-}C_{16})$-Alkyl steht, in dem zusätzlich auch zwischen zwei Kohlenstoffatomen ein Sauerstoffatom eingeschoben sein kann.

Beispiele für Reste, für die $R^8$ stehen kann, sind n-Hexyl, Isoheptyl, n-Octyl, Isooctyl, tert-Octyl, 2-Ethylhexyl, 1,1,3,3-Tetramethylbutyl, 1,5-Dimethylhexyl, 1-Methylheptyl, n-Nonyl, Isononyl, 3,5,5-Trimethylhexyl, n-Decyl, n-Dodecyl, Isododecyl, Hexadecyl, 3-(2-Ethylhexyloxy)propyl, 3-Isononyloxypropyl.

Für $M^{\oplus 1}$ bis $M^{\oplus 6}$ stehende Kationen der allgemeinen Formel IV sind insbesondere dann günstig, wenn in Alkoholen lösliche Tetrakisazoverbindungen der allgemeinen Formel I erwünscht sind. Besonders bevorzugt steht $R^8$ für geradkettiges oder verzweigtes $(C_8\text{-}C_{12})$-Alkyl, in dem zusätzlich auch zwischen zwei Kohlenstoffatomen ein Sauerstoffatom eingeschoben sein kann.

Die Kationen $M^{\oplus 1}$ bis $M^{\oplus 6}$ können in jedem Fall alle gleich, teilweise gleich oder alle unterschiedlich sein, unabhängig davon, ob es sich um organische oder anorganische Kationen handelt. Es können in den Verbindungen der allgemeinen Formel I auch anorganische und organische Kationen nebeneinander vorliegen. Die Auswahl der Kationen richtet sich nach der vorgesehenen Verwendung der Verbindungen. In einer bevorzugten Form der vorliegenden Erfindung sind die Kationen $M^{\oplus 1}$ bis $M^{\oplus 6}$ alle gleich, oder es steht ein Teil der Kationen $M^{\oplus 1}$ bis $M^{\oplus 6}$ übereinstimmend für ein Kation und der restliche Teil der Kationen $M^{\oplus 1}$ bis $M^{\oplus 6}$ übereinstimmend für ein anderes Kation. Beispielsweise kann, z.B. auch bedingt durch einen vorgegebenen pH-Wert, ein Teil der Kationen $M^{\oplus 1}$ bis $M^{\oplus 6}$ für das Wasserstoffion stehen, und der restliche Teil hat übereinstimmend eine bestimmte andere Bedeutung.

$R^1$ steht bevorzugt für Wasserstoff.
$R^2$ steht bevorzugt für Wasserstoff.
$R^3$ und $R^{3'}$ stehen bevorzugt unabhängig voneinander für Wasserstoff oder Methyl.
n steht bevorzugt für 0.

In bevorzugten Tetrakisazoverbindungen der allgemeinen Formel I stehen eine oder mehrere der Gruppen $R^1$, $R^2$, $R^3$ und $R^{3'}$ und/oder eines oder mehrere der Kationen $M^{\oplus 1}$ bis $M^{\oplus 6}$ und/oder die Zahl n für die jeweiligen bevorzugten Bedeutungen. Besonders bevorzugte Tetrakisazoverbindungen der allgemeinen Formel I sind solche, in denen $R^1$ und $R^2$ für Wasserstoff stehen und $R^3$ und $R^{3'}$ unabhängig voneinander für Wasserstoff oder Methyl stehen. Ganz besonders bevorzugt sind Tetrakisazoverbindungen der allgemeinen Formel I, in denen $R^1$, $R^2$ und $R^3$ für Wasserstoff stehen, n für 0 steht und die Kationen $M^{\oplus 1}$ bis $M^{\oplus 6}$ gleich sind. Darüber hinaus bevorzugt stehen, wenn wasserlösliche Tetrakisazofarbstoffe der allgemeinen Formel I erwünscht sind, die Kationen $M^{\oplus 1}$ bis $M^{\oplus 6}$ für das Lithium-, Natrium-, Kalium- oder Ammoniumion oder für ein organisches Ammoniumion der allgemeinen Formel III, und wenn alkohollösliche Tetrakisazofarbstoffe der allgemeinen Formel I erwünscht sind, die Kationen $M^{\oplus 1}$ bis $M^{\oplus 6}$ für ein organisches Ammoniumion der allgemeinen Formel IV.

Die Herstellung der Verbindungen der allgemeinen Formel I kann in an sich bekannter Weise erfolgen, indem eine Bis-azoverbindung der allgemeinen Formel V,

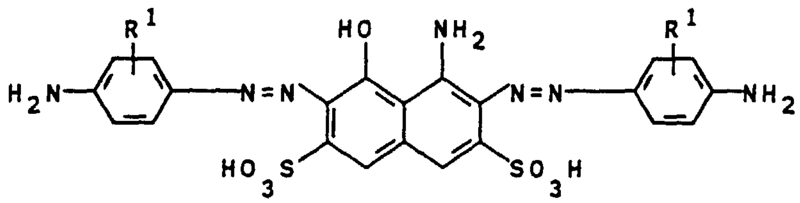

(V)

in der $R^1$ die oben angegebenen Bedeutungen hat, unter üblichen Bedingungen, z.B. mit Natriumnitrit/Säure, an den endständigen Aminogruppen bis-diazotiert wird, und das erhaltene Bis-Diazoniumsalz der allgemeinen Formel VI

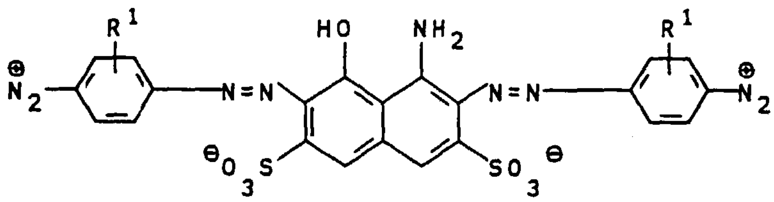

(VI)

auf ein N-(3-N-(3-Hydroxyphenyl)iminodiessigsäure- bzw. -dipropionsäure-Derivat der allgemeinen Formel VII,

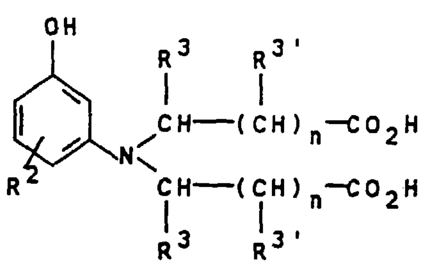

(VII)

in der $R^3$ und $R^{3'}$ sowie n die oben angegebenen Bedeutungen haben, oder ein Salz davon gekuppelt wird. Die Kupplungsreaktion wird bevorzugt in wäßrigem Reaktionsmedium bei pH-Werten von 5 bis 12, besonders bevorzugt bei pH-Werten von 7 bis 10, durchgeführt. Die Kupplungstemperatur liegt im allgemeinen bei -5 bis 30°C, bevorzugt bei 0 bis 10°C. Die Kupplung kann, wenn eine Position nicht durch den Substituenten $R^2$ blockiert ist, sowohl in para-Stellung zur Hydroxygruppe als auch in para-Stellung zur disubstituierten Aminogruppe der Verbindung der allgemeinen Formel VII erfolgen. In solchen Fällen liegen die Verbindungen der allgemeinen Formel I daher im allgemeinen als Gemische der entsprechenden Isomeren vor.

Nach der Durchführung der Kupplungsreaktion erfolgt dann - vor oder nach einer ersten Isolierung des Kupplungsprodukts - gegebenenfalls durch Einführung der Kationen $M^{\oplus 1}$ bis $M^{\oplus 6}$ die Überführung in die gewünschte Salz- bzw. Säureform.

Die Verbindungen der allgemeinen Formel V können in an sich bekannter Weise durch Kupplungsreaktion von 1-Amino-8-hydroxynaphthalin-3,6-disulfonsäure bzw. ihrem Mononatriumsalz (H-Säure) mit zwei Äquivalenten eines durch Diazotierung eines 4-Nitroanilin-Derivats erhaltenen 4-Nitrobenzoldiazoniumsalzes zur Verbindung der allgemeinen Formel VIII,

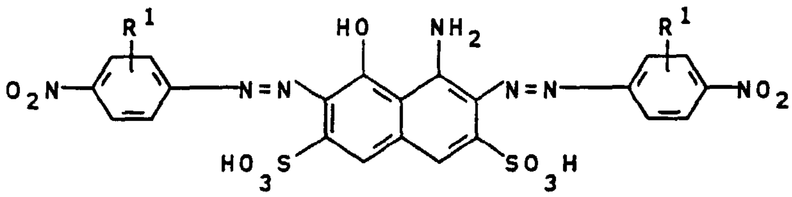

(VIII)

in der $R^1$ wie oben angegeben definiert ist, und anschließende Reduktion der Nitrogruppen in der Verbindung der allgemeinen Formel VIII zu den Aminogruppen, beispielsweise mit Natriumsulfid als Reduktionsmittel, erhalten werden. Beispiele für geeignete 4-Nitroanilinderivate sind 4-Nitroanilin, 2-Methyl-4-nitroanilin, 2-Ethyl-4-nitroanilin, 3-Methyl-4-nitroanilin, 3-Ethyl-4-nitroanilin.

Die Verbindungen der allgemeinen Formel VII können durch Alkylierung von Verbindungen der allgemeinen Formel IX,

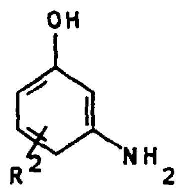

(IX)

worin $R^2$ wie oben angegeben definiert ist, mit Verbindungen der allgemeinen Formel X,

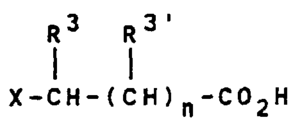

(X)

worin $R^3$ und $R^{3'}$ sowie n wie oben angegeben definiert sind und X für Chlor, Brom oder Iod steht, oder ihren Salzen erhalten werden. Diese Umsetzung wird vorzugsweise in wäßrigem Reaktionsmedium bei pH-Werten von 3 bis 8, besonders bevorzugt 5 bis 8, und bei Temperaturen von 40 bis 140°C, besonders bevorzugt 80 bis 120°C, durchgeführt. Die erhaltenen Verbindungen der allgemeinen Formel VII bzw. ihre Salze werden vorzugsweise ohne Zwischenisolierung als wäßrige Lösung in die Umsetzung mit den Verbindungen der allgemeinen Formel VI eingesetzt.

Geeignete Verbindungen der allgemeinen Formel IX sind beispielsweise 3-Aminophenol, 3-Amino-4-methylphenol, 3-Amino-5-methylphenol, 5-Amino-2-methylphenol, 3-Amino-4-chlorphenol und 3-Amino-4-ethylphenol. Besonders bevorzugt ist 3-Aminophenol.

Geeignete Verbindungen der allgemeinen Formel X sind beispielsweise Monochloressigsäure, Monobromessigsäure, 2-Chlorpropionsäure, 2-Brompropionsäure, 3-Chlorpropionsäure, 3-Brompropionsäure und deren Salze, wobei Monochloressigsäure und Natrium-monochloracetat bevorzugt sind.

Die erfindungsgemäßen Tetrakisazoverbindungen der allgemeinen Formel I können nach der Kupplungsreaktion durch Zusatz von Mineralsäuren, z.B. Salz- oder Schwefelsäure, in Form der schwerlöslichen freien Farbstoffsäuren der allgemeinen Formel Ia,

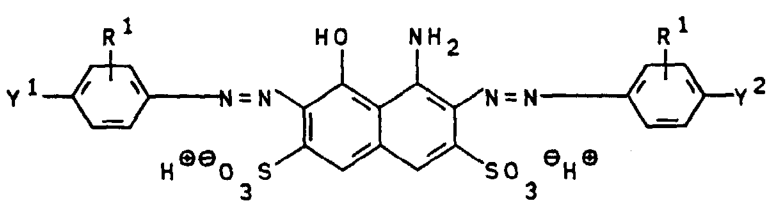

(Ia)

worin

$Y^1$-

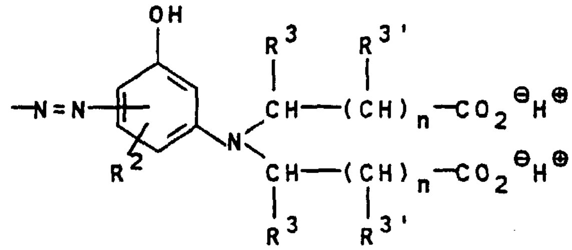

und

$Y^2$-

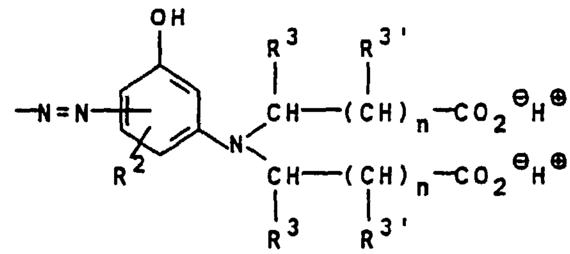

bedeuten und in der $R^1$, $R^2$, $R^3$, $R^{3'}$ und n die oben angegebenen Bedeutungen haben, ausgefällt werden. Die Farbstoffsäuren der allgemeinen Formel Ia können auf übliche Weise, z.B. durch Filtrieren oder Zentrifugieren, isoliert werden und können durch Waschen mit Wasser oder angesäuertem Wasser von anorganischen Salzen befreit werden. Die so erhaltene salzarme Farbsäure kann dann z.B. in wäßrigem Medium, mit Basen wie geeigneten Metallhydroxiden und/oder -carbonaten, beispielsweise Lithiumhydroxid, Lithiumcarbonat, Natriumhydroxid, Natriumhydrogencarbonat, Natriumcarbonat, Kaliumhydroxid oder Kaliumcarbonat, und/oder Ammoniak und/oder Aminen und/oder Ammoniumhydroxiden neutralisiert bzw. in die gewünschte Verbindung der allgemeinen Formel I überführt werden. An dieser Stelle können auch mehrere Basen zugesetzt werden, um Verbindungen der allgemeinen Formel I mit unterschiedlichen Kationen $M^{\oplus 1}$ bis $M^{\oplus 6}$ zu erhalten. Die Basen können fest, flüssig oder gelöst zugesetzt werden und werden bevorzugt in handelsüblicher Form eingesetzt.

Zur Herstellung wasserlöslicher erfindungsgemäßer Tetrakisazofarbstoffe der allgemeinen Formel I eignen sich neben den beispielhaft genannten Lithium-, Natrium- und Kaliumverbindungen und Ammoniak beispielsweise folgende Amine und Ammoniumhydroxide und deren Gemische miteinander oder mit den genannten anorganischen Basen: Methylamin, Ethylamin, Propylamin, Isopropylamin, n-Butylamin, Isobutylamin, sec-Butylamin, Dimethylamin, Diethylamin, Dipropylamin, Diisopropylamin, Trimethylamin, Ethanolamin, Diethanolamin, Triethanolamin, Allylamin, 2-Dimethylaminoethylamin, 3-Diethylaminopropylamin, Dibutyl(2-hydroxyethyl)amin, Ethylendiamin, 1,2-Diaminopropan, 1,3-Diaminopropan, 1-Amino-2-hydroxypropan, 1-Amino-2,3-dihydroxypropan, 1-Dimethylamino-2,3-dihydroxypropan, N-Methyl-N,N-bis-(2-hydroxyethyl)amin, N-(2-(2-Hydroxyethoxy)ethyl)amin, N,N-Bis-(2-(2-hydroxyethoxy)ethyl)-amin, N,N,N-Tris-(2-(2-hydroxyethoxy)ethyl)amin, )ethyl)amin, Diethylentriamin, Triethylentetramin, Pyridin, Pyrrolidin, N-Methyl-pyrrolidin, N-(2-Hydroxyethyl)pyrrolidin, Piperidin, N-(2-Hydroxyethyl)piperidin, Morpholin, N-(2-Hydroxyethyl)morpholin, Tetramethylammoniumhydroxid.

Zur Herstellung alkohollöslicher erfindungsgemäßer Tetrakisazofarbstoffe der allgemeinen Formel I sind beispielsweise folgende Amine oder deren Gemische geeignet: Isoheptylamin, n-Octylamin, iso-Octylamin, tert-Octylamin, 2-Ethylhexylamin, 1,1,3,3-Tetramethylbutylamin, 1,5-Dimethylhexylamin, 1-Methylheptylamin, Nonylamin, Isononylamin, 3,5,5-Trimethylhexylamin, Decylamin, Dodecylamin, Hexadecylamin, 3-(2-Ethylhexyloxy)propylamin, 3-(Isononyloxy)propylamin.

Zur Herstellung erfindungsgemäßer alkohollöslicher Tetrakisazoverbindungen der allgemeinen Formel I ist es auch möglich, die nach obigem Herstellungsprozeß zunächst in Form der Alkalisalze erhaltenen Verbindungen - z.B. in wäßrigem Medium - mit Alkylammoniumsalzen umzusetzen, die Ammoniumkationen der allgemeinen Formel IV enthalten und als Gegenion z.B. Chlorid oder Sulfat enthalten. Diese Umsetzungen erfolgen bevorzugt bei pH-Werten von 4 bis 8, besonders bevorzugt bei pH-Werten von 5 bis 7. Die durch diesen Kationenaustausch erhaltenen Tetrakisazoverbindungen der allgemeinen Formel I, in der $M^{\oplus 1}$ bis $M^{\oplus 6}$ für Ammoniumkationen der allgemeinen Formel IV

stehen, können aus wäßrigem Reaktionsmedium aufgrund ihrer geringen Wasserlöslichkeit in einfacher Weise, z.B. durch Filtration oder Zentrifugation, isoliert werden und mit Wasser frei von unerwünschten Salzen gewaschen werden.

Aus den oben beschriebenen, durch Umsetzung der Farbstoffsäuren der allgemeinen Formel Ia mit geeigneten anorganischen und/oder organischen Basen erhältlichen wäßrigen Lösungen der Verbindungen der allgemeinen Formel I können die Farbstoffe gewünschtenfalls z.B. durch Zusatz eines Fällungsmittels oder durch Einengen bzw. Trocknung, z.B. Sprühtrocknung, in Substanz isoliert und so in die Weiterverarbeitung, z.B. die Herstellung von Aufzeichnungsflüssigkeiten, eingesetzt werden. Die oben beschriebenen wäßrigen Lösungen können aber auch direkt weiterverarbeitet werden, z.B. zur Herstellung von Aufzeichnungsflüssigkeiten verwendet werden, wobei die Lösungen zunächst im allgemeinen noch einer Mikrofiltration zur Entfernung unlöslicher Partikel und/oder einer Dialyse oder Ultrafiltration zur Entfernung von anorganischen Salzen unterworfen werden.

Die erfindungsgemäßen Polyazofarbstoffe der allgemeinen Formel I eignen sich in hervorragender Weise zum Färben und Bedrucken von natürlichen und synthetischen Fasermaterialien, z.B. von aus Baumwolle oder Polyamid hergestellten Textilmaterialien, insbesondere aber zum Färben und Bedrucken von Leder und Papier, speziell sauren Papierarten. Auf diesen Materialien mit den erfindungsgemäßen Farbstoffen erzeugte Färbungen und Drucke zeichnen sich durch besonders gute Echtheiten, z.B. Wasser- und Abriebechtheit, aus.

Zudem eignen sich die löslichen erfindungsgemäßen Tetrakisazoverbindungen der allgemeinen Formel I insbesondere in ausgezeichneter Weise für die Herstellung von Tinten und Aufzeichnungsflüssigkeiten, vor allem solchen für das Tintenstrahl- oder Ink-Jet-Druckverfahren. Gegenüber hierfür gemäß dem Stand der Technik eingesetzten Farbstoffen z.B. der allgemeinen Formel II weisen die erfindungsgemäßen Farbstoffe insbesondere im Hinblick auf die Löslichkeit der Farbstoffe, die Farbstärke und die Echtheiten, speziell die Naß- und Abriebechtheit, überraschende Vorteile auf. Aufzeichnungsflüssigkeiten, die eine oder mehrere der Tetrakisazoverbindungen der allgemeinen Formel I enthalten, liefern, speziell beim Ink-Jet-Druckverfahren, schwarze Druckbilder von ausgezeichneter Qualität, die eine sehr gute Schärfe und Brillanz sowie Licht- und vor allem Wasser- und Abriebfestigkeit besitzen, insbesondere auf schwach sauren Papierarten. Bei der Lagerung von Tinten und Aufzeichnungsflüssigkeiten, die mit löslichen Tetrakisazoverbindungen der allgemeinen Formel I als Farbstoffe hergestellt werden, tritt auch bei langer Lagerung keine Abscheidung von Kristallen ein, die zu einem Verstopfen von Düsen und unscharfen Druckbildern führen kann. Die Lagerstabilität ist mit den erfindungsgemäßen Farbstoffen wesentlich besser als mit den vergleichbaren Farbstoffen aus dem Stand der Technik.

Die erfindungsgemäßen Farbstoffe der allgemeinen Formel I sind gegenüber denen des Standes der Technik auch aus toxikologischen Gründen vorteilhaft.

Gegenstand der vorliegenden Erfindung sind auch Tinten und Aufzeichnungsflüssigkeiten, die dadurch gekennzeichnet sind, daß sie eine oder mehrere lösliche Tetrakisazoverbindungen der allgemeinen Formel I enthalten. Die Herstellung von solchen Aufzeichnungsflüssigkeiten erfolgt nach an sich bekannten Verfahren, Angaben über Zusammensetzungen, insbesondere auch solchen von Tinten für das Strahldruckverfahren, finden sich z.B. in DE-A-21 32 324, DE-A-21 60 475, US-A-4 024 096, US-A-4 045 397 und US-A-4 070 322. Die genaue Zusammensetzung der Aufzeichnungsflüssigkeit wird selbstverständlich dem beabsichtigten Verwendungszweck angepaßt.

Die fertigen Aufzeichnungsflüssigkeiten enthalten im allgemeinen insgesamt 0,5 bis 15 Gew.% (trocken gerechnet) eines oder mehrerer löslicher Farbstoffe der allgemeinen Formel I, 0 bis 99 Gew.% Wasser und 0,5 bis 99,5 Gew.% Lösungsmittel und/oder Feuchthaltemittel. In einer bevorzugten Ausführungsform enthalten die fertigen Aufzeichnungsflüssigkeiten 0,5 bis 15 Gew.% Farbstoff (trocken gerechnet), 40 bis 85 Gew.% Wasser und 10 bis 50 Gew.% Lösungsmittel und/oder Feuchthaltemittel, in einer anderen bevorzugten Ausführungsform 0,5 bis 15 Gew.% Farbstoff (trocken gerechnet), 0 bis 20 Gew.% Wasser und 70 bis 99,5 Gew.% Lösungsmittel und/oder Feuchthaltemittel. Die fertigen Aufzeichnungsflüssigkeiten enthalten in der Regel noch weitere, nachstehend erwähnte Zusätze.

Zur Herstellung der Aufzeichnungsflüssigkeiten benutztes Wasser wird vorzugsweise in Form von destilliertem oder entsalztem Wasser eingesetzt. Bei dem in den Aufzeichnungsflüssigkeiten enthaltenen Lösungsmittel und/oder Feuchthaltemittel kann es sich um ein organisches Lösungsmittel oder um ein Gemisch derartiger Lösungsmittel handeln, wobei es bevorzugt ist, wasserlösliche Lösungsmittel einzusetzen. Geeignete Lösungsmittel sind z.B. ein- und mehrwertige Alkohole, deren Ether und Ester, so z.B. Alkanole, insbesondere mit 1 bis 4 C-Atomen, wie z.B. Methanol, Ethanol, Propanol, Isopropanol, Butanol, Isobutanol, tert.-Butanol; zwei-und dreiwertige Alkohole, insbesondere solche mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z.B. Triethylenglykol, Polyethylenglykol, Tripropylenglykol, Polypropylenglykol; niedere Alkylether von mehrwertigen Alkoholen, wie z.B Ethylenglykol-monomethyl- oder -ethyl- oder -propyl- oder -butyl-ether, Diethylenglykol-mono-methyl- oder -ethyl-ether, Triethylenglykol-mono-methyl- oder -ethyl-ether; Ketone und Ketoalkohole, insbesondere solche mit 3 bis 7 C-Atomen, wie z.B. Aceton, Methylethylketon, Diethylketon, Methylisobutylketon, Methylpentylketon, Cyclopentanon, Cyclohexanon, Diacetonalkohol; Ether, wie z.B. Dibutylether, Tetrahydrofuran, Dioxan; Ester, wie z.B. Ethylformiat, Methylformiat, Methylacetat, Ethylacetat, Propylenacetat, Butylacetat, Phenylacetat, Ethylenglykol-mono-ethyletheracetat, Essigsäure-2-hydroxyethylester; Amide, wie z.B. Dimethylformamid, Dimethylacetamid, N-Methylpyrrolidon; ferner Harnstoff, Tetramethylharnstoff, Thiodiglykol.

Von den vorgenannten Substanzen wirken einige nicht nur als Lösungsmittel, sondern entfalten auch noch andere Eigenschaften. So wirken z.B. die mehrwertigen Alkohole auch als Feuchthaltemittel.

Weiter können die Aufzeichnungsflüssigkeiten übliche Zusatzstoffe enthalten, z.B. Konservierungsmittel, wie z.B. Phenol-Derivate, kationische, anionische oder nichtionische oberflächenaktive Substanzen (Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.%, vorzugsweise 0,5 bis 5 Gew.% in der Aufzeichnungsflüssigkeit vorhanden.

Bei Aufzeichnungsflüssigkeiten für das Tintenstrahl-Druckverfahren können je nach der Ausführungsform dieses Druckverfahrens, z.B. als Continuous-jet-, Intermittent-jet-, Impulse-jet- oder Compound-jet-Verfahren, gegebenenfalls noch weitere Additive, z.B. zur Pufferung des pH-Wertes, zur Einstellung der elektrischen Leitfähigkeit, der spezifischen Wärme, des thermischen Expansionskoeffizienten, zugesetzt werden.

Die Aufzeichnungsflüssigkeiten lassen sich in einfacher Weise durch Vermischen der Komponenten herstellen, was z.B. so erfolgen kann, daß ein oder mehrere Farbstoffe der allgemeinen Formel I in Wasser und/oder Lösungsmittel gelöst werden oder auch so, daß eine bei der Herstellung des Farbstoffs der allgemeinen Formel I anfallende wäßrige Lösung gegebenenfalls nach geeigneter Vorbereitung im gewünschten Maße verdünnt wird, und daß dann weitere Komponenten, wie Wasser, Lösungsmittel, Zusatzstoffe etc., zugemischt werden.

Die einen oder mehrere Farbstoffe der allgemeinen Formel I enthaltenden Aufzeichnungsflüssigkeiten eignen sich hervorragend zum Einsatz bei Druck-, Vervielfältigungs-, Markierungs-, Schreib-, Zeichen-, Stempel- oder Registrierverfahren, insbesondere aber auch bei dem Tintenstrahl-Druckverfahren. Dabei werden schwarze Drucke von hoher Qualität erhalten, die eine hohe Schärfe und Brillianz sowie gute Wasser-, Licht- und Abriebfestigkeit besitzen. Gegenüber vergleichbaren Farbstoffen weisen die erfindungsgemäßen Farbstoffe der allgemeinen Formel I eine höhere Wasserlöslichkeit sowie eine bessere Wasserechtheit, insbesondere auf schwach sauren Papierarten auf. Ferner sind sie aus toxikologischen Gründen vorteilhaft.

Bei der Lagerung erfindungsgemäßer Tinten tritt keine Abscheidung von Niederschlägen auf; ferner tritt beim Tintenstrahldruck beim Einsatz der erfindungsgemäßen Tinten keine Verstopfung der Düsen auf. Es treten auch keine Änderungen der physikalischen Eigenschaften erfindungsgemäßer Tinten ein, wenn sie in einem Tintenstrahldrucker längere Zeit unter ständiger Rezirkulation oder intermittierend unter zwischenzeitiger Abschaltung des Tintenstrahldruckers angewandt werden.

**Beispiel 1**

a Herstellung von N-(3-Hydroxyphenyl)iminodiessigsäure, Di-Natriumsalz

21,8 g 3-Aminophenol werden in 50 ml Wasser eingetragen und auf 90°C geheizt. Anschließend gibt man eine Lösung von 47,7 g Natrium-monochloracetat in 75 ml Wasser zu, wobei der pH-Wert des Reaktionsgemischs durch Zugabe von 28,5 g Natriumhydrogencarbonat bei 6,5 bis 7 gehalten wird. Zur Vervollständigung der Alkylierungsreaktion rührt man 4 Stunden bei 90 bis 95°C nach. Die erhaltene Lösung kann ohne Zwischenisolierung der erhaltenen N-(3-Hydroxyphenyl)iminodiessigsäure weiterverarbeitet werden.

b) Herstellung des Farbstoffs

60,2 g des in üblicher Weise durch Diazotierung von 27,8 g 4-Nitroanilin und Kupplung des erhaltenen 4-Nitrobenzol-diazoniumchlorids mit 31,9 g H-Säure (1-Amino-8-hydroxynaphthalin-3,6-disulfonsäure, Mononatriumsalz) und anschließende Sulfid-Reduktion der Nitrogruppen erhaltenen Bisazo-Farbstoffs der Formel Va

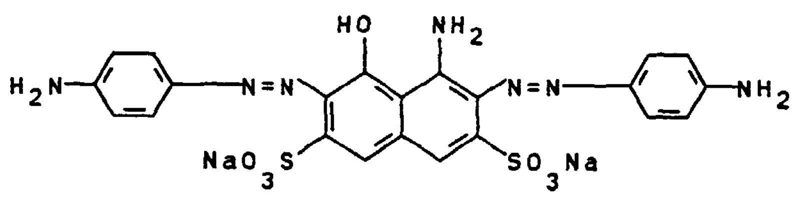

(Va) .

werden als 45 gew.%ige wäßrige Lösung bei einem pH-Wert von 7,5 bis 8 mit 13,9 g Natriumnitrit versetzt. Diese Lösung wird in 30 Min. zu einer Mischung von 99,0 g 30 gew.%iger Salzsäure, 100 ml Wasser und 100 g Eis gegeben.

Während der Zudosierung wird die Temperatur durch Zugabe von 300 g Eis bei 0 bis 5°C gehalten. Man rührt 3 Stunden bei 0 bis 5°C nach und entfernt dann überschüssige salpetrige Säure mit Amidosulfonsäure.

Die Suspension des erhaltenen Bis-Diazoniumsalzes wird im Verlauf von 1 Stunde zu einer Mischung aus der nach a) hergestellten wäßrigen Lösung des N-(3-Hydroxyphenyl)-iminodiessigsäure-di-Natriumsalzes, 35,0 g Natriumcarbonat und 150 g Eis gegeben.

Nach Vervollständigung der Kupplungsreaktion und Zugabe von 75,0 g 30 gew.%iger Salzsäure bis zu einem pH-Wert von 2 wird die ausgefallene Farbstoffsäure durch Filtration isoliert und mit Wasser elektrolytfrei gewaschen.

Anschließend wird die erhaltene Farbstoffsäure in 500 ml Wasser angerührt und mit Lithiumhydroxid neutralisiert (pH 7 bis 7,5). Nach Trocknung der erhaltenen Farbstofflösung erhält man 107,9 g des schwarzen Tetrakisazofarbstoffs der Formel I mit $R^1$, $R^2$, $R^3$ = Wasserstoff, n = 0 und $M^{\oplus 1}$ bis $M^{\oplus 6}$ = $Li^{\oplus}$. Absorptionsspektrum des Farbstoff in Wasser: $\lambda_{max}$ = 632 nm.

Der erhaltene Tetrakisazofarbstoff weist eine ausgezeichnete Farbstärke, Löslichkeit und Wasserechtheit auf.

**Beispiel 2**

Man verfährt nach den Angaben des Beispiels 1 und setzt nach Vervollständigung der Kupplungsreaktion bei einem pH-Wert von 6 der wäßrigen Lösung 800 ml einer 0,5 molaren wäßrigen Lösung von 3-(2-Ethylhexyloxy)propylammoniumchlorid zu. Das ausgefallene Produkt wird durch Filtration isoliert, mit Wasser salzfrei gewaschen und getrocknet.

Ausbeute: 152,7 g schwarzer Tetrakisazofarbstoff der Formel I mit $R^1$, $R^2$, $R^3$ = Wasserstoff, n = 0, $M^{\oplus 1}$ bis $M^{\oplus 6}$ =

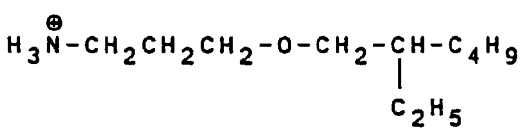

Absorptionsspektrum des Farbstoffs in Ethanol:
$\lambda_{max}$ = 634 nm.

Das Produkt weist eine ausgezeichnete Löslichkeit in Alkoholen sowie eine gute Licht- und Wasserechtheit auf.

In Tabelle 1 sind weitere erfindungsgemäße Tetrakisazofarbstoffe der allgemeinen Formel I aufgeführt, die nach den Angaben der Beispiele 1 und 2 hergestellt werden können. $R^1$ ist in diesen Beispielen Wasserstoff.

| Beispiel | eingesetzte Kupplungskomponente der allgemeinen Formel VII | $M^{\oplus 1}$ bis $M^{\oplus 6}$ |
|---|---|---|
| 3 | 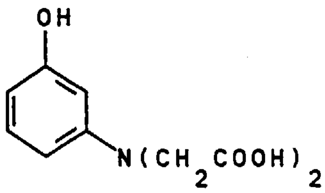 | $Na^{\oplus}$ |
| 4 | 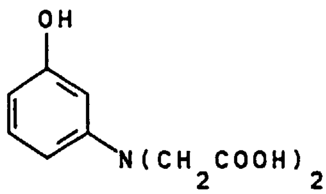 | $NH_4^{\oplus}$ |
| 5 | 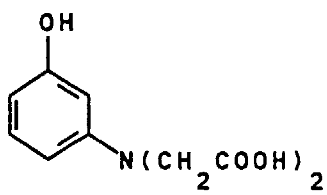 | $N^{\oplus}(CH_3)_4$ |
| 6 | 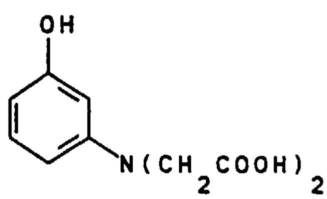 | $HN^{\oplus}(CH_2CH_2OH)_3$ |
| 7 | 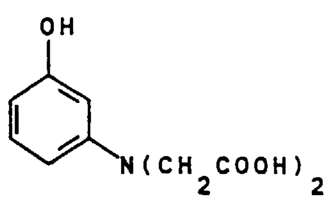 | $H_3N^{\oplus}-CH_2CH_2O-CH_2CH_2OH$ |

| Beispiel | eingesetzte Kupplungskomponente der allgemeinen Formel VII | $M^{\oplus 1}$ bis $M^{\oplus 6}$ |
|---|---|---|
| 8 | 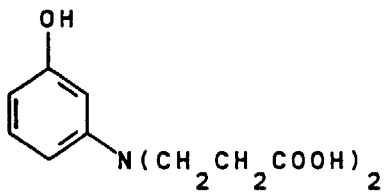 | $Li^{\oplus}$ |
| 9 | 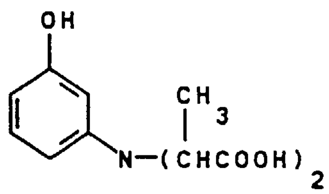 | $Li^{\oplus}$ |
| 10 | 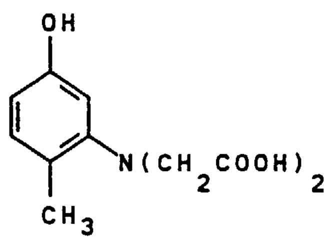 | $Li^{\oplus}$ |
| 11 | 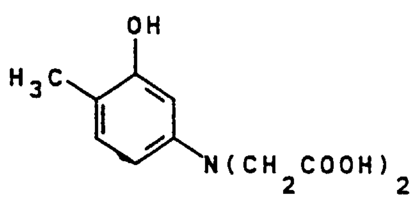 | $H_2N^{\oplus}(CH_2CH_2OH)_2$ |
| 12 | 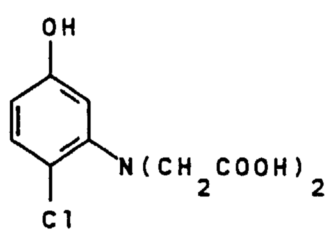 | $Li^{\oplus}$ |

| Beispiel | eingesetzte Kupplungskomponente der allgemeinen Formel VII | $M^{\oplus 1}$ bis $M^{\oplus 6}$ |
|---|---|---|
| 13 | 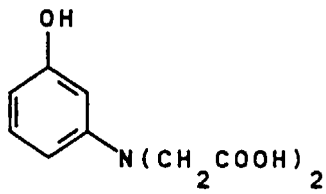 | 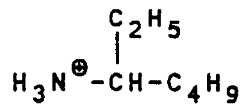 |
| 14 | 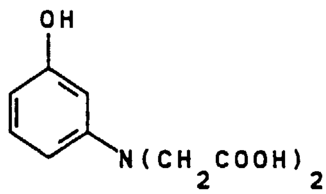 | 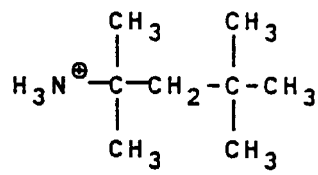 |
| 15 | 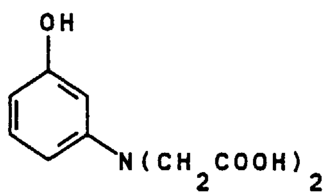 | $H_3N^{\oplus}-(CH_2)_6-CH(CH_3)_2$ |
| 16 | 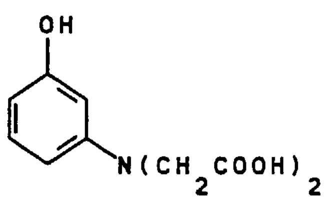 | $H_3N^{\oplus}-(CH_2)_3-O-(CH_2)_6-CH(CH_3)_2$ |
| 17 | 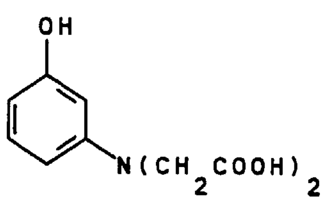 | 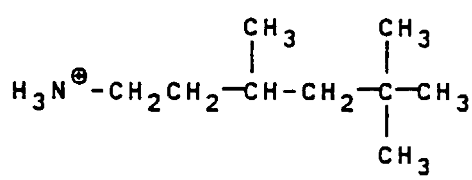 |

**Beispiel 18**

Durch Mischen der Komponenten wird eine Aufzeichnungsflüssigkeit folgender Rezeptur hergestellt:

4 Gew.% Farbstoff gemäß Beispiel 1,

4 Gew.% Triethanolamin,
77 Gew.% destilliertes Wasser,
15 Gew.% Diethylenglykol

**Patentansprüche**

1. Tetrakisazoverbindungen der allgemeinen Formel I,

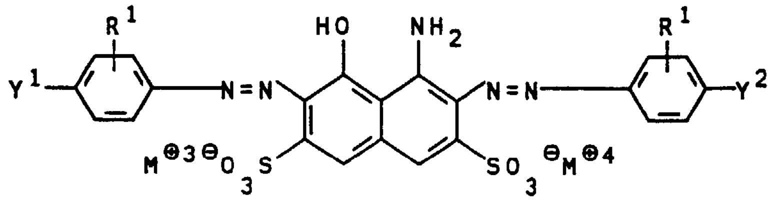

(I)

worin

$Y^1$ -

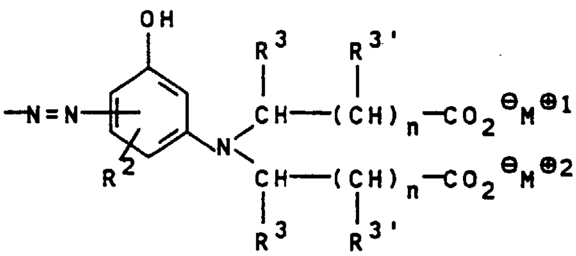

und

$Y^2$ -

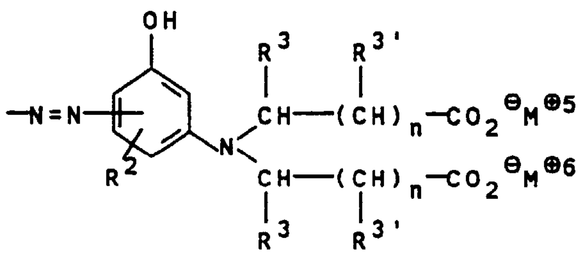

bedeuten und

$R^1$ für Wasserstoff oder ($C_1$-$C_4$)-Alkyl steht;
$R^2$ für Wasserstoff, ($C_1$-$C_4$)-Alkyl oder Halogen steht;
$R^3$ und $R^{3'}$ unabhängig voneinander für Wasserstoff oder ($C_1$-$C_4$)-Alkyl stehen;
$M^{\oplus 1}$, $M^{\oplus 2}$, $M^{\oplus 3}$, $M^{\oplus 4}$, $M^{\oplus 5}$ und $M^{\oplus 6}$ unabhängig voneinander für ein Kation stehen;
n für 0 oder 1 steht.

2. Tetrakisazofarbstoffe der allgemeinen Formel I gemäß Anspruch 1, dadurch gekennzeichnet, daß $R^1$ und $R^2$ für Wasserstoff stehen.

3. Tetrakisazofarbstoffe der allgemeinen Formel I gemäß Anspruch 1 und/oder 2, dadurch gekennzeichnet, daß $R^3$ und $R^{3'}$ unabhängig voneinander für Wasserstoff oder Methyl stehen.

4. Wasserlösliche Tetrakisazofarbstoffe der allgemeinen Formel I gemäß einem oder mehreren der Ansprüche 1 bis 3, dadurch gekennzeichnet, daß $M^{\oplus 1}$ bis $M^{\oplus 6}$ unabhängig voneinander für das Lithiumion, das Natriumion, das Kaliumion, das Ammoniumion oder ein organisches Ammoniumion der allgemeinen Formel III

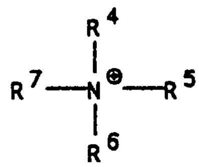

(III)

stehen, in der $R^4$, $R^5$, $R^6$ und $R^7$ unabhängig voneinander für Wasserstoff, unsubstituiertes $(C_1\text{-}C_4)$-Alkyl oder durch eine oder mehrere Hydroxy- oder 2-Hydroxyethoxy-Gruppen substituiertes $(C_1\text{-}C_4)$-Alkyl stehen.

5. Alkohollösliche Tetrakisazofarbstoffe der allgemeinen Formel I gemäß einem oder mehreren der Ansprüche 1 bis 3, dadurch gekennzeichnet, daß $M^{\oplus 1}$ bis $M^{\oplus 6}$ unabhängig voneinander für Ammoniumionen der allgemeinen Formel IV

$$R^8\text{-}\overset{\oplus}{N}H_3 \qquad (IV)$$

stehen, in der $R^8$ für geradkettiges oder verzweigtes $(C_6\text{-}C_{16})$-Alkyl steht, in dem zusätzlich auch zwischen zwei Kohlenstoffatomen ein Sauerstoffatom eingeschoben sein kann.

6. Verfahren zur Herstellung von Tetrakisazoverbindungen der allgemeinen Formel I gemäß einem oder mehreren der Ansprüche 1 bis 5, dadurch gekennzeichnet, daß eine Bisazoverbindung der allgemeinen Formel V,

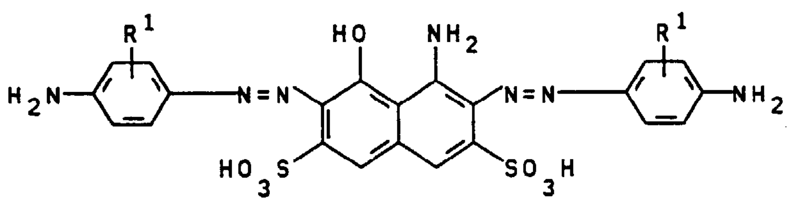

(V)

in der $R^1$ wie in den Ansprüchen 1 bis 5 angegeben definiert ist, an den endständigen Aminogruppen bisdiazotiert wird und das erhaltene Bis-diazoniumsalz auf eine Verbindung der allgemeinen Formel VII,

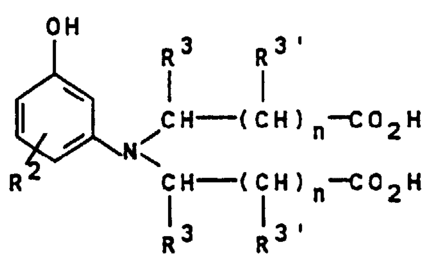

(VII)

in der $R^2$, $R^3$ und $R^{3'}$ und n wie in den Ansprüchen 1 bis 5 angegeben definiert sind, oder ein Salz davon gekuppelt wird und gegebenenfalls die Überführung in die gewünschte Salz- oder Säureform erfolgt.

7. Verwendung von Tetrakisazofarbstoffen der allgemeinen Formel I gemäß einem oder mehreren der Ansprüche 1 bis 5 zum Färben und Bedrucken von natürlichen und synthetischen Fasermaterialien.

**8.** Verwendung von löslichen Tetrakisazofarbstoffen der allgemeinen Formel I gemäß einem oder mehreren der Ansprüche 1 bis 5 zur Herstellung von Tinten und Aufzeichnungsflüssigkeiten.

**9.** Aufzeichnungsflüssigkeit, enthaltend insgesamt 0,5 bis 15 Gew.% eines oder mehrerer löslicher Farbstoffe der allgemeinen Formel I gemäß einem oder mehreren der Ansprüche 1 bis 5, 0 bis 99 Gew.% Wasser und 0,5 bis 99,5 Gew.% Lösungsmittel und/oder Feuchthaltemittel.

**10.** Aufzeichnungsflüssigkeit gemäß Anspruch 9, insbesondere für das Tintenstrahl- oder Ink-Jet-Druckverfahren, enthaltend insgesamt 0,5 bis 15 Gew.% eines oder mehrerer löslicher Farbstoffe der allgemeinen Formel I und entweder 40 bis 85 Gew.% Wasser und 10 bis 50 Gew.% Lösungsmittel und/oder Feuchthaltemittel oder 0 bis 20 Gew.% Wasser und 70 bis 99,5 Gew.% Lösungsmittel und/oder Feuchthaltemittel.

## Claims

**1.** Tetrakisazo compounds of the general formula I

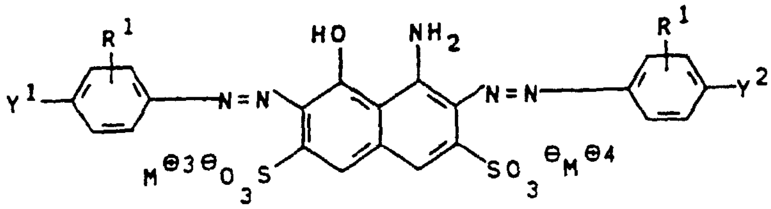

(I)

in which

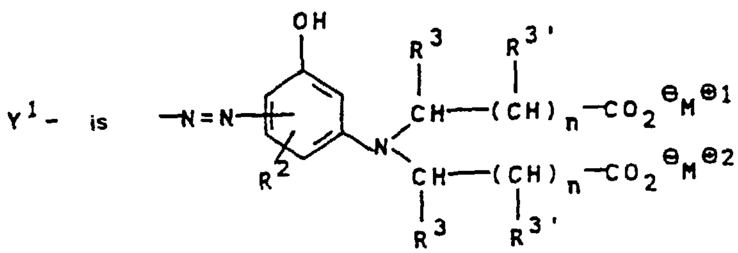

and

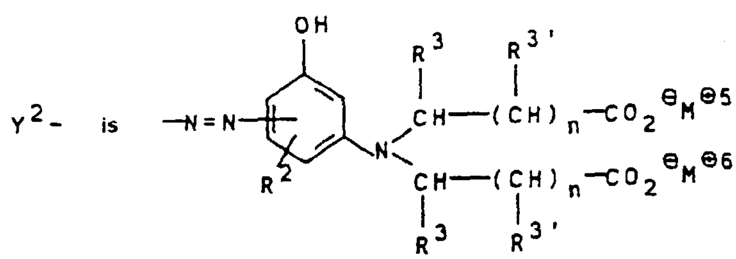

and

$R^1$ is hydrogen or $(C_1\text{-}C_4)$-alkyl;
$R^2$ is hydrogen, $(C_1\text{-}C_4)$-alkyl or halogen;
$R^3$ and $R^{3'}$ independently of one another are hydrogen or $(C_1\text{-}C_4)$-alkyl;
$M^{\oplus 1}$, $M^{\oplus 2}$, $M^{\oplus 3}$, $M^{\oplus 4}$, $M^{\oplus 5}$ and $M^{\oplus 6}$ independently of one another are a cation;

n is 0 or 1.

2. Tetrakisazo dyes of the general formula I according to Claim 1, characterized in that $R^1$ and $R^2$ are hydrogen.

3. Tetrakisazo dyes of the general formula I according to Claim 1 and/or 2, characterized in that $R^3$ and $R^{3'}$ independently of one another are hydrogen or methyl.

4. Water-soluble tetrakisazo dyes of the general formula I according to one or more of Claims 1 to 3, characterized in that $M^{\oplus 1}$ to $M^{\oplus 6}$ independently of one another are the lithium ion, the sodium ion, the potassium ion, the ammonium ion or an organic ammonium ion of the general formula III

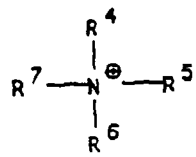

(III)

in which $R^4$, $R^5$, $R^6$ and $R^7$ independently of one another are hydrogen, unsubstituted ($C_1$-$C_4$)-alkyl or ($C_1$-$C_4$)-alkyl which is substituted by one or more hydroxyl or 2-hydroxyethoxy groups.

5. Alcohol-soluble tetrakisazo dyes of the general formula I according to one or more of Claims 1 to 3, characterized in that $M^{\oplus 1}$ to $M^{\oplus 6}$ independently of one another are ammonium ions of the general formula IV

$$R^8-\overset{\oplus}{N}H_3 \qquad (IV)$$

in which $R^8$ is straight-chain or branched ($C_6$-$C_{16}$)-alkyl in which, in addition, an oxygen atom can also be inserted between two carbon atoms.

6. Process for the preparation of tetrakisazo compounds of the general formula I according to one or more of Claims 1 to 5, characterized in that a bisazo compound of the general formula V

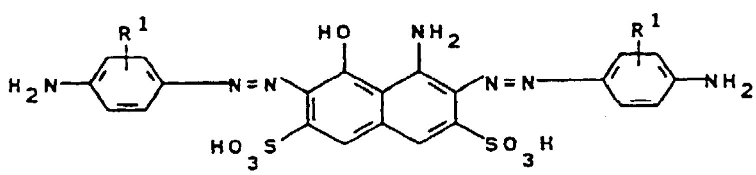

(V)

in which $R^1$ is as defined in Claims 1 to 5 is bisdiazotized on the terminal amino groups and the resulting bisdiazonium salt is coupled onto a compound of the general formula VII

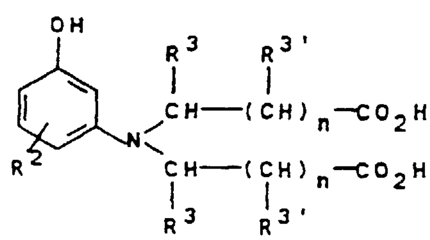

(VII)

in which $R^2$, $R^3$ and $R^{3'}$ and n are as defined in Claims 1 to 5, or a salt thereof, and the product is converted if desired into the desired salt or acid form.

**7.** Use of tetrakisazo dyes of the general formula I according to one or more of Claims 1 to 5 for the dyeing and printing of natural and synthetic fibre materials.

**8.** Use of soluble tetrakisazo dyes of the general formula I according to one or more of Claims 1 to 5 for the production of inks and recording liquids.

**9.** Recording liquid containing in total from 0.5 to 15% by weight of one or more soluble dyes of the general formula I according to one or more of Claims 1 to 5, from 0 to 99% by weight of water and from 0.5 to 99.5% by weight of solvents and/or humectants.

**10.** Recording liquid according to Claim 9, in particular for the ink-jet printing method, containing in total from 0.5 to 15% by weight of one or more soluble dyes of the general formula I and either from 40 to 85% by weight of water and from 10 to 50% by weight of solvents and/or humectants or from 0 to 20% by weight of water and from 70 to 99.5% by weight of solvents and/or humectants.

## Revendications

**1.** Composés tétrakisazoïques de formule générale I

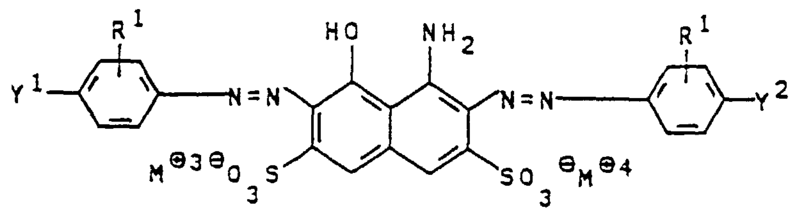

(I)

ou
$Y^1$ représente

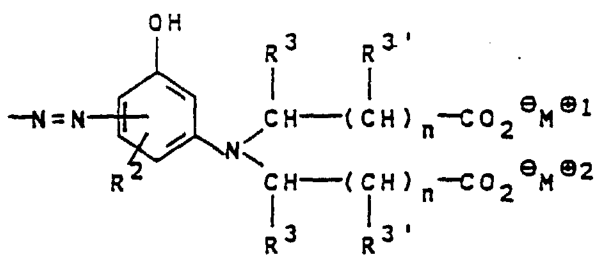

et $Y^2$ représente

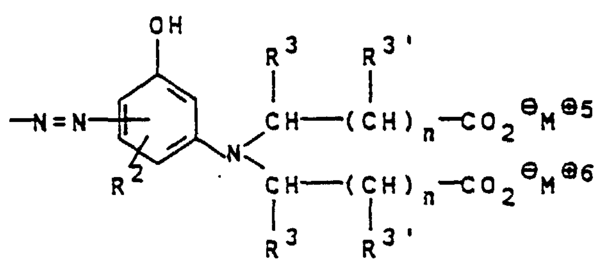

et

| | |
|---|---|
| $R^1$ | représente un atome d'hydrogène ou un groupe alkyle en $C_1$-$C_4$ ; |
| $R^2$ | représente un atome d'hydrogène, un groupe alkyle en $C_1$-$C_4$ ou un atome d'halogène ; |
| $R^3$ et $R^{3'}$, | indépendamment l'un de l'autre, représentent un atome d'hydrogène ou un groupe alkyle en $C_1$-$C_4$ ; |
| $M^{\oplus 1}$, $M^{\oplus 2}$, $M^{\oplus 3}$, $M^{\oplus 4}$, $M^{\oplus 5}$ et $M^{\oplus 6}$, | indépendamment les uns des autres, représentent un cation ; |
| n | vaut 0 ou 1. |

**2.** Colorants tétrakisazoïques de formule générale I, caractérisés en ce que $R^1$ et $R^2$ représentent un atome d'hydrogène.

**3.** Colorants tétrakisazoïques de formule générale I selon la revendication 1 et/ou 2, caractérisés en ce que $R^3$ et $R^{3'}$, indépendamment l'un de l'autre, représentent un atome d'hydrogène ou un groupe méthyle.

**4.** Colorants tétrakisazoïques hydrosolubles de formule générale I selon une ou plusieurs des revendications 1 à 3, caractérisés en ce que $M^{\oplus 1}$ à $M^{\oplus 6}$, indépendamment les uns des autres, représentent l'ion lithium, l'ion sodium, l'ion potassium ou un ion ammonium organique de formule générale III

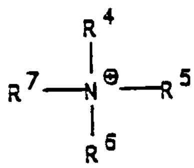

(III)

dans laquelle $R^4$, $R^5$, $R^6$ et $R^7$, indépendamment les uns des autres, représentent un atome d'hydrogène, un groupe alkyle en $C_1$-$C_4$ non substitué ou un groupe alkyle en $C_1$-$C_4$ substitué par des groupes hydroxy ou 2-hydroxyéthoxy.

**5.** Colorants tétrakisazoïques de formule générale I, solubles dans des alcools, selon une ou plusieurs des revendications revendication 1 à 3, caractérisés en ce que $M^{\oplus 1}$ à $M^{\oplus 6}$, indépendamment les uns des autres, représentent des ions ammonium organique de formule générale IV

$$R^8\text{-}N^{\oplus} H_3 \qquad (IV)$$

dans laquelle $R^8$ représente un reste alkyle en $C_6$-$C_{16}$ linéaire ou ramifié, dans lequel, de plus, un atome d'oxygène peut être inséré entre deux atomes de carbone.

**6.** Procédé de préparation de composés tétrakisazoïques de formule générale I selon une ou plusieurs des revendications 1 à 5, caractérisé en ce que l'on effectue une bis-diazotation des groupes amino terminaux d'un composé bis-azoïque de formule générale V

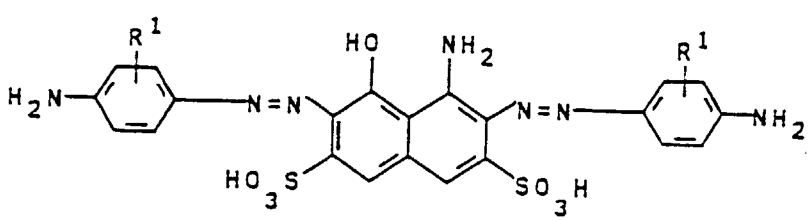

(V)

dans laquelle $R^1$ est défini comme dans les revendications 1 à 5, et on copule le sel de bisdiazonium obtenu à un

composé de formule générale VII

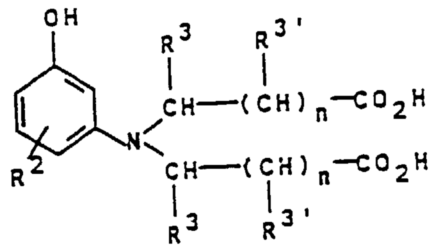

(VII)

dans laquelle $R^2$, $R^3$ et $R^{3'}$ et n sont définis comme dans les revendications 1 à 5, ou à un sel de celui-ci, et on réalise éventuellement la transformation en la forme salifiée ou acide voulue.

**7.** Utilisation des colorants tétrakisazoïques de formule générale I selon une ou plusieurs des revendications 1 à 5, pour la teinture et l'impression de matières fibreuses naturelles et synthétiques.

**8.** Utilisation de colorants tétrakisazoïques solubles de formule générale I selon une ou plusieurs des revendications 1 à 5, pour la préparation d'encres et de liquides d'enregistrement.

**9.** Liquide d'enregistrement, contenant au total de 0,5 à 15 % en poids d'un ou plusieurs des colorants solubles de formule générale I selon une ou plusieurs des revendications 1 à 5, de 0 à 99 % en poids d'eau et de 0,5 à 99,5 % en poids de solvant et/ou d'agent de rétention d'eau.

**10.** Liquide d'enregistrement selon la revendication 9, notamment pour le procédé d'impression à jet d'encre ou "ink-jet", contenant au total de 0,5 à 15 % en poids d'un ou plusieurs colorants solubles de formule générale I et soit de 40 à 85 % en poids d'eau et de 10 à 50 % en poids de solvant et/ou d'agents de rétention d'humidité, soit de 0 à 20 % en poids d'eau et de 70 à 99,5 % en poids de solvant et/ou d'agent de rétention d'humidité.